# EUROPÄISCHE PATENTANMELDUNG

(11) **EP 0 725 131 A1**
(43) Veröffentlichungstag der Anmeldung: **07.08.1996**
(21) Anmeldenummer: 96100874.5
(22) Anmeldetag: 23.01.1996
(51) Int. Cl.: C11D 3/37, C11D 3/22, C08F 251/00

(54) **Verwendung von wasserlöslichen gepfropften Naturstoffen als Additiv für Geschirrspülmittel**

(30) Priorität: 01.02.1995 DE 19503116
(71) Anmelder: BASF Aktiengesellschaft, 67063 Ludwigshafen (DE)
(72) Erfinder: Pothoff-Karl, Birgit, Dr., D-67061 Ludwigshafen (DE); Denziger, Walter, D-67346 Speyer (DE); Kistenmacher, Axel, Dr., D-67061 Ludwigshafen (DE); Gümbel, Helmut, Dr., D-67814 Dannenfels (DE)

(57) **Zusammenfassung**

Verwendung von wasserlöslichen Pfropfpolymeren von Monosacchariden, Oligosacchariden, Polysacchariden und deren Derivaten, die erhältlich sind durch radikalisch initiierte Polymerisation von
(A) Monomermischungen aus
   (a) 40 bis 100 Gew.% monoethylenisch ungesättigten C₃ - bis C₁₀- Monocarbonsäuren und/oder monoethylenisch ungesättigten C₄ - bis C₈-Dicarbonsäuren, deren Anhydriden, Alkalisalzen und/oder Ammoniumsalzen,
   (b) 0 bis 60 Gew.% anderen monoethylenisch ungesättigten Monomeren, die mit den Monomeren (a) copolymerisierbar sind, und
   (c) O bis 5 Gew.% mindestens 2 ethylenisch ungesättigte, nicht konjugierte Doppelbindungen im Molekül aufweisenden Monomeren
   in Gegenwart von
(B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- und Polysacchariden oder Mischungen der genannten Verbindungen
im Gewichtsverhältnis (A): (B) von (95 bis 20): (5 bis 80) als Additiv für Geschirrspülmittel, die
(1) mindestens 5 Gew.% mindestens eines Ammonium- oder Alkalimetallcarbonats oder eines Ammonium- oder Alkalimetallsulfats und
(2) mindestens 2 Gew.% Natriumsilikat
enthalten.

## Beschreibung

Die Erfindung betrifft die Verwendung von wasserlöslichen gepfropften Naturstoffen, die durch Polymerisieren von monoethylenisch ungesättigten Carbonsäuren und gegebenenfalls anderen Monomeren in Gegenwart von Monosacchariden, Oligosacchariden, Polysacchariden und/oder Derivaten davon erhältlich sind, als Additiv für Geschirrspülmittel.

Aus der US-PS 4 203 858 sind phosphatfreie, wenig schäumende Geschirrspülmittel bekannt, die ein Ammonium- oder Alkalimetallcarbonat, ein Tensid, ggf. bis zu etwa 50 Gew.% Natriumsilikat und ein wasserlösliches Salz der Polyacrylsäure, Polymethacrylsäure oder von Copolymerisaten aus Acrylsäure und Methacrylsäure enthalten. Sofern die bekannten Geschirrrspülmittel hohe Anteile an Silikaten enthalten, so bilden sich auf den gespülten Waren, wie Geschirr, Bestecken und Glaswaren, Silikatbeläge aus, die das Reinigungsergebnis beeinträchtigen.

Aus der DE-OS 31 33 529 sind phosphat- und silikatfreie, schwachschäumende Geschirrspülmittel bekannt, die als wesentliche Bestandteile
(a) 2,5 bis 20 Gew.-Teile mindestens einer mit Alkalien neutralisierten Aminopolycarbonsäure mit 1 bis 4 Stickstoffatomen, z.B. Nitrilotriessig- säure oder Ethylendiamintetraessigsäure,
(b) 0,5 bis 10 Gew.-Teile wasserlösliche Alkalimetallsalze von carboxylgruppenhaltigen Polymerisaten, wie Homopolymerisaten der Acrylsäure, Methacrylsäure und Maleinsäure sowie Copolymerisate der Maleinsäure mit C₁- bis C₄-Alkylvinylethern, Ethylen, Acrylsäure oder Methacrylsäure, und
(c) 0,5 bis 8 Gew.-Teile eines nichtionischen Tensids,
enthalten, wobei der pH-Wert des Geschirrspülmittels in wäßriger Lösung 6 bis 8,5 beträgt. Es handelt sich hierbei um flüssige Formulierungen.

Die DE-A-3 743 739 betrifft wasserlösliche Polymerisate enthaltende Geschirrspülmittel auf Basis von Mischungen aus
(a) mindestens 5 Gew.% mindestens eines Ammonium- oder Alkalimetallcarbonats oder eines Ammonium- oder Alkalimetallsulfats,
(b) mindestens 2 Gew.% Natriumsilikat, und
(c) 0,5 bis 20 Gew.% wasserlöslichen Polymerisaten, die ein Molekulargewicht von 500 bis 8000 haben und die
   (1) 50 bis 95 Gew.% Acrylsäure und/oder Methacrylsäure und/oder deren Alkali- oder Ammoniumsalze,
   (2) 0 bis 25 Gew.% Acrylamid und/oder Methacrylamid und
   (3) 5 bis 25 Gew.% 2-Acrylamido-2-methylpropansulfonsäure, Vinylsulfonsäure, Styrolsulfonsäure, 3-Sulfopropylacrylat, 3-Sulfopropylmethacrylat, deren Mischungen und/oder deren Alkali- oder Ammoniumsalze
mit der Maßgabe einpolymerisiert enthalten, daß die Summe der Angaben in Gew.% unter (1) bis (3) immer 100 beträgt. Die Geschirrspülmittel enthalten gegebenenfalls zusätzlich
(d) mindestens 1 Gew.% eines schaumarmen Tensids der Formel 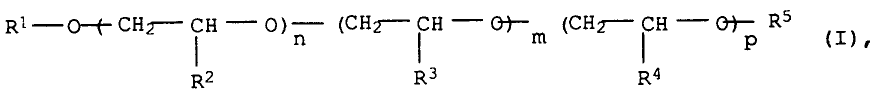
in der
- R¹: = H, C₄- bis C₁₈-Alkyl
- R², R³, R⁴: = H, CH₃, C₂C₅
- R⁵: = H, C₁ - bis C₄-Alkyl
- n, m, p: = 1 bis 70
bedeuten.

Die DE-A-3 744 592 betrifft wasserlösliche Polymerisate enthaltende Geschirrspülmittel auf Basis von Mischungen aus
(a) mindestens 5 Gew.% mindestens eines Ammonium- oder Alkalimetallcarbonats oder eines Ammonium- oder Alkalimetallsulfats,
(b) mindestens 2 Gew.% Natriumsilikat, und
(c) 0,5 bis 20 Gew.% wasserlöslichen Polymerisaten, die einen K-Wert von 7 bis 20 haben und die durch Polymerisieren von Maleinsäureanhydrid oder Mischungen aus Maleinsäureanhydrid und mindestens einer damit copolymerisierbaren ethylenisch ungesättigten Verbindung in einem aromatischen Kohlenwasserstoff bei Temperaturen von 60 bis 200⁰C in Gegenwart von 1 bis 20 Gew.%, bezogen auf die Monomeren, an Peroxiestern, die sich von gesättigten oder ethylenisch ungesättigten Carbonsäuren ableiten, und durch Hydrolysieren der Polymerisate erhältlich sind.

Die Geschirrspülmittel können gegebenenfalls zusätzlich
(d) mindestens 1 Gew.% eines schaumarmen Tensids der Formel 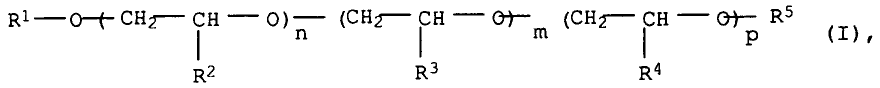
enthalten, in der
- R¹: = H, C₄- bis C₁₈-Alkyl
- R², R³, R⁴: = H, CH₃, C₂C₅
- R⁵: = H, C₁- bis C₄-Alkyl
- n, m, p: = 1 bis 70
bedeuten.

Der Erfindung liegt die Aufgabe zugrunde, Natriumsilikat enthaltende Geschirrspülmittel zur Verfügung zu stellen, die bei der maschinellen Geschirrspülwäsche auf Geschirr, Bestecken und Glaswaren praktisch keine Silikatbeläge hinterlassen und deren polymere Komponenten unter teilweiser Verwendung nachwachsender Rohstoffe hergestellt sind und die dadurch eine deutlich verbesserte biologische Abbaubarkeit besitzen.

Die Aufgabe wird erfindungsgemäß gelöst mit der Verwendung von wasserlöslichen Pfropfpolymeren von Monosacchariden, Oligosacchariden, Polysacchariden und deren Derivaten, die erhältlich sind durch radikalisch initiierte Polymerisation von
(A) Monomerenmischungen aus
   (a) 40 bis 100 Gew.% monoethylenisch ungesättigten C₃ - bis C₁₀- Monocarbonsäuren und/oder monoethylenisch ungesättigten C₄- bis C₈-Dicarbonsäuren, deren Anhydriden, Alkalisalzen und/oder Ammoniumsalzen,
   (b) 0 bis 60 Gew.% anderen monoethylenisch ungesättigten Monomeren, die mit den Monomeren (a) copolymerisierbar sind, und
   (c) 0 bis 5 Gew.% mindestens 2 ethylenisch ungesättigte, nicht konjugierte Doppelbindungen im Molekül aufweisenden Monomeren
   in Gegenwart von
(B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- und Polysacchariden oder Mischungen der genannten Verbindungen
im Gewichtsverhältnis (A) : (B) von (95 bis 20): (5 bis 80) als Additive für Geschirrspülmittel, die
(1) mindestens 5 Gew.% mindestens eines Ammonium- oder Alkalimetallcarbonats oder eines Ammonium- oder Alkalimetallsulfats und
(2) mindestens 2 Gew.% Natriumsilikat enthalten. Die Geschirrspülmittel enthalten 0,5 bis 20 Gew.% der wasserlöslichen Pfropfpolymerisate.

Die Geschirrspülmittel enthalten (1) Ammoniumcarbonat oder Alkalimetallcarbonate, wie Natriumcarbonat oder Kaliumcarbonat sowie Ammoniumsulfat, Natriumsulfat und Kaliumsulfat. Man kann auch Mischungen der genannten Salze einsetzen, z.B. Mischungen aus Natriumcarbonat und Natriumsulfat. Die Geschirrspülmittel enthalten vorzugsweise mindestens 20 bis ca. 50 Gew.% mindestens einer Verbindung der Gruppe (1).

Als Komponente (2) der Geschirrspülmittel kommen wasserlösliche Natriumsilikate in Betracht. Hierbei handelt es sich entweder um Natriummetasilikat oder um Natriumdisilikat. Die Natriumsilikate können beispielsweise mit Hilfe des molaren Verhältnisses von Siliciumdioxid zu Natriumoxid von 0,9:1 bis 3,6:1 charakterisiert werden. Die Geschirrspülmittel enthalten mindestens 2 bis etwa 94,5 Gew.% eines der in Betracht kommenden Natrium- silikate.

Flüssige Geschirrspülmittel haben einen wesentlich geringeren Natriumsilikatgehalt als pulverförmige Geschirrspülmittel, die vorzugsweise 53 bis 70 Gew.% einer Verbindung der Komponente (2) enthalten.

Ein weiterer Bestandteil der Geschirrspülmittel können schaumarme Tenside sein, die beispielsweise mit Hilfe der Formel 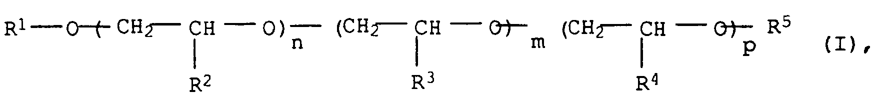
in der
- R¹: = H, C₄- bis C₁₈-Alkyl
- R², R³, R⁴: = H, CH₃, C₂C₅
- R⁵: = H, C₁- bis C₄-Alkyl
- n, m, p: = 1 bis 70
charakterisiert werden. Geeignete Verbindungen der Formel I sind beispielsweise daudrch erhältlich, daß man an C₄- bis C₁₈-, vorzugsweise C₈- bis C₁₈-Alkohole, 1bis 70, vorzugsweise 2 bis 15 Mol Ethylenoxid pro Mol Alkohol addiert. Man kann jedoch an die genannten Alkohole zunächst Propylenoxid oder Butylenoxid addieren und anschließend Ethylenoxid anlagern. Weitere Variationsmöglichkeiten ergeben sich dadurch, daß man an die genannten Alkohole zunächst Ethylenoxid, dann Propylenoxid und/oder Butylenoxid anlagert, so daß Blockcopolymerisate entstehen. Die in Betracht kommenden Tenside enthalten vorzugsweise 2 bis 15 Ethylenoxideinheiten, 1 bis 4 Propylenoxideinheiten und/oder 1 bis 2 Butylenoxideinheiten. Vorzugsweise verwendet man Ethoxylate von C₉- bis C₁₅-Alkoholen, die pro Mol Alkohol 2 bis 15 Mol Ethylenoxid und 1 bis 4 Mol Propylenoxide angelagert enthalten.

Weitere schaumarme Tenside sind beispielsweise Blockcopolymerisate des Ethylenoxids und Propylenoxids, bei denen in Formel I der Substituent R¹ = H, n, p = 5 bis 35 und m = 20 bis 50 bedeuten. Produkte dieser Art sind bekannt; sie werden in den Geschirrspülmitteln in einer Menge bis zu 10, vorzugsweise 1 bis 6 Gew.% eingesetzt. Flüssige Geschirrspülmittel, die alkalisch eingestellt sind, enthalten im allgemeinen keine Tenside. Neutral reagierende flüssige Geschirrspülmittel können dagegen Tenside in den oben angegebenen Mengen enthalten.

Die Geschirrspülmittel können gegebenenfalls eine Chlor abspaltende Verbindung, z.B. Dichlorisocyanurat oder Hypochlorit enthalten. Falls solche Verbindungen eingesetzt werden, sind sie in einer Menge von bis zu 3 Gew.%, bezogen auf aktives Chlor, das aus diesen Verbindungen abgespalten wird, in den Geschirrspülmitteln enthalten. Diese Verbindungen werden bevorzugt in flüssigen Geschirrspülmitteln eingesetzt.

Die Geschirrspülmittel können außerdem gegebenenfalls noch weitere Bestandteile, wie Gluconsäure oder Glucoheptonsäure in einer Menge bis zu 20 Gew.% enthalten. Falls diese Verbindungen eingesetzt werden, verwendet man davon vorzugsweise 5 bis 12 Gew.%, bezogen auf das Geschirrspülmittel.

Die Geschirrspülmittel enthalten erfindungsgemäß wasserlösliche Pfropfpolymerisate, die durch Homo- oder Copolymerisation der Monomeren (A) in Gegenwart der Naturstoffe (B) erhältlich sind. Solche Pfropfpolymerisate werden in der EP-A-0 441 197 beschrieben.

Die Monomermischungen (A) enthalten als Monomere der Gruppe (a) monoethylenisch ungesättigte C₃- bis C₁₀-Monocarbonsäuren sowie deren Alkali- und/oder Ammoniumsalze. Zu diesen Monomeren gehören beispielsweise Acrylsäure, Methacrylsäure, Dimethylacrylsäure, Ethylacrylsäure, Allylessigsäure und Vinylessigsäure. Vorzugsweise verwendet man aus dieser Gruppe von Monomeren Acrylsäure, Methacrylsäure, deren Gemische sowie die Natrium-, Kali- oder Ammoniumsalze oder deren Mischungen. Diese Monomeren werden entweder allein oder in Mischung mit monoethylenisch ungesättigten Dicarbonsäuren oder deren Anhydriden in Gegenwart von Naturstoffen (B) polymerisiert. Solche Dicarbonsäuren enthalten 4 bis 8 C-Atome, z.B. Maleinsäure, Fumarsäure, Itaconsäure, Mesaconsäure, Methylenmalonsäure, Citraconsäure, Maleinsäureanhydrid, Itaconsäureanhydrid und Methylenmalonsäureanhydrid. Die monoethylenisch ungesättigten C₄ - bis C₈-Dicarbonsäuren können in Form der freien Säuren oder in mit Alkalimetallbasen, Ammoniak oder Aminen neutralisierter Form bei der Pfropfpolymerisation eingesetzt werden. Von den in Betracht kommenden Dicarbonsäuren bzw. deren Anhydriden verwendet man vorzugsweise Maleinsäure, Maleinsäureanhydrid, Itaconsäure oder Itaconsäureanhydrid sowie die Natrium-, Kali- oder Ammoniumsalze von Maleinsäure oder Itaconsäure. Diese Salze sind beispielsweise aus Maleinsäureanhydrid oder Itaconsäureanhydrid erhältlich, wenn man die genannten Anhydride in wäßriger Lösung mit Natronlauge, Kalilauge oder Ammoniak bzw. Aminen neutralisiert. Die genannten Dicarbonsäuren bzw. ihre Anhydride oder ihre Salze werden bevorzugt auch allein in Gegenwart der Naturstoffe (B) polymerisiert.

Von besonderem anwendungstechnischen Interesse sind solche Pfropfpolymerisate, die durch Copolymerisation von
(1) 10 bis 90, vorzugsweise 12 bis 80 Gew.% monoethylenisch ungesättigten C₄ - bis C₈-Dicarbonsäuren, ihren Anhydriden, Salzen oder Mischungen mit
(2) 90 bis 10, vorzugsweise 88 bis 20 Gew.% monoethylenisch ungesättigten C₃ - bis C₁₀-Monocarbonsäuren, ihren Alkali- oder Ammoniumsalzen oder Mischungen der freien Säuren und der Salze
in Gegenwart von Naturstoffen (B) erhältlich sind. Technisch interessant sind insbesondere Pfropfcopolymerisate, die durch Copolymerisation von
(1) 15 bis 60 Gew.% Maleinsäure, Itaconsäure oder deren Alkali- oder Ammoniumsalzen mit
(2) 85 bis 40 Gew.% Acrylsäure, Methacrylsäure, Gemischen aus Acrylsäure und Methacrylsäure, deren Alkali- oder Ammoniumsalzen oder Mischungen der freien Säuren und der Salze
in Gegenwart von Naturstoffen (B) erhältlich sind.

Die Monomeren der Gruppe (a) können gegebenenfalls zusammen mit (b) anderen monoethylenisch ungesättigten Monomeren, die mit den Monomeren (a) copolymerisierbar sind, der Pfropfcopolymerisation unterworfen werden. Der Anteil der Monomeren (a) in der Monomermischung (A) beträgt 40 bis 100 Gew.%, während die Monomeren (b) bis zu 60 Gew.% darin anwesend sein können.

Zu den Monomeren der Gruppe (b), die bei der Pfropfcopolymerisation gegebenenfalls eingesetzt werden, gehören beispielsweise C₁ - bis C₆-Alkyl- und Hydroxyalkylester der unter (a) genannten Verbindungen, z.B. Methylacrylat, Ethylacrylat, n-Butylacrylat, Methylmethacrylat, Maleinsäuremonomethylester, Maleinsäuredimethylester, Maleinsäuremonoethylester, Maleinsäurediethylester, Hydroxyethylacrylat, Hydroxypropylacrylate, Hydroxybutylacrylate, Hydroxyethylmethacrylat und Hydroxypropylmethacrylate. Außerdem kommen die Amide und N-substituierten Alkylamide der unter (a) angegebenen Verbindungen als Monomere der Gruppe (b) in Betracht, z.B. Acrylamid, Methacrylamid, N-Alkylacrylamide mit 1 bis 18 C-Atomen in der Alkylgruppe, wie beispielsweise N-Methylacrylamid, N-Dimethy1acrylamid, N-tert . -Butylacrylamid, N-Octadecylacrylamid, Ma1einsäuremonoethylhexylamid, Maleinsäuremonododecylamid, Dimethylaminopropylmethacrylamid und Acrylamidoglykolsäure. Ebenso eignen sich als Monomere (b) Alkylaminoalkyl(meth) acrylate, z .B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Dimethylaminopropylacrylamid und Dimethylaminopropylmethacrylamid.

Außerdem eignen sich als Monomere der Gruppe (b) Sulfogruppen enthaltende Monomere, wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester und Acrylamidomethylpropansulfonsäure sowie Phosphonsäuregruppen enthaltende Monomere, wie beispielsweise Vinylphosphonsäure, Allylphosphonsäure und Acrylamidomethylpropanphosphon- säure. Zu dieser Gruppe von Monomeren gehören außerdem N-Viny1pyrro1idon, N-Viny lcaprolactam, N-Viny1formamid, N-Vinyl-N-methylformamid, 1-Viny l- imidazol, 1-Vinyl-2-methylimidazol, Vinylacetat und Vinylpropionat. Als Monomere der Gruppe (b) eignen sich außerdem die Ester von alkoxylierten C₁- bis C₁₈-Alkoholen, die mit 2 bis 50 Mol Ethylenoxid, Propylenoxid, Butylenoxid oder Mischungen davon umgesetzt sind, mit den monoethylenisch ungesättigten Carbonsäuren der Gruppe (a), z.B. die Ester der Acrylsäure, Methacrylsäure oder Maleinsäure mit einem C₁₃/C₁₅-Oxoalkohol, der mit unterschiedlichen Mengen an Ethylenoxid zur Reaktion gebracht wurde, z.B. 3 Mol, 5 Mol, 7 Mol, 10 Mol oder 30 Mol Ethylenoxid.

Von den Estern der Dicarbonsäuren kommen sowohl die Mono- als auch die Diester in Betracht. Die basischen Monomeren wurden vorzugsweise in Form der Salze mit Mineralsäuren, z.B. Salzsäure, Schwefelsäure oder Salpeter- säure, oder in quaternierter Form eingesetzt (geeignete Quaternierungsmittel sind beispielsweise Dimethylsulfat, Diethy1sulfat, Methylchlorid, Ethylchlorid oder Benzylchlorid).

Weiterhin kommen als Monomere der Gruppe (b) Amide von monoethylenisch ungesättigten C₃- bis C₈-Carbonsäuren mit Amidgruppen der Struktur 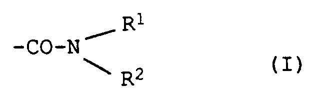
in Betracht, in der 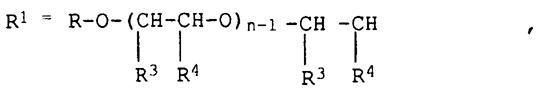
- R³, R⁴: = H, CH₃, C₂H₅
- R: = C₁- bis C₂₈-Alkyl,
- n: = 2 bis 100 und
- R²: = H, R¹
bedeuten.

Die bevorzugten Monomeren der Gruppe (b) sind Hydroxyethylacrylat, Hydroxypropylacrylate, Vinylacetat, N-Vinylpyrrolidon, Acrylamidomethyl- propansulfonsäure, Vinylsulfonsäure, Methallylsulfonat und N-Vinylimidazol.

Bevorzugt werden solche Pfropfcopolymerisate, zu deren Herstellung man als Komponente (A)
(a) Acrylsäure, Methacrylsäure, Maleinsäure oder deren Gemische und
(b) Acrylamidomethylpropansulfonsäure, Vinylsulfonsäure, Allylsulfonsäure, Methallylsulfonsäure, N-Vinylimidazol oder deren Gemische
einsetzt.

Eine weitere Modifizierung der Pfropfcopolymerisate kann dadurch erreicht werden, daß man die Pfropfpolymerisation in Gegenwart von Monomeren der Gruppe (c) durchführt. Die Monomermischungen enthalten in diesem Fall bis zu 5 Gew.% eines mindestens zwei ethylenisch ungesättigte nicht-konjugierte Doppelbindungen im Molekül aufweisenden Monomers. Diese Verbindungen werden üblicherweise bei Copolymerisationen als Vernetzer verwendet. Sie können den zur Copolymerisation eingesetzten Monomeren der Gruppe (a) oder den Monomermischungen aus (a) und (b) zugesetzt werden. Im Falle ihres Einsatzes beträgt die bevorzugt verwendete Menge an Monomeren (c) 0,05 bis 2 Gew.%. Die Mitverwendung der Monomeren der Gruppe (c) während der Copolymerisation bewirkt eine Erhöhung der K-Werte der Copolymerisate. Geeignete Verbindungen dieser Art sind beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3000.

Die Polymerisation der Monomeren (a) sowie gegebenenfalls noch zusätzlich (b) und (c) erfolgt in Gegenwart von Naturstoffen auf Basis von Polysacchariden, Oligosacchariden, Monosacchariden und deren Derivaten. Die Naturstoffe sind z.B. Saccharide pflanzlichen oder tierischen Ursprungs oder Produkte des Stoffwechsels von Mikroorganismen sowie deren Abbau- und Modifizierungsprodukte, die bereits in Wasser oder Alkalien dispergierbar oder löslich sind oder während der Polymerisation der Monomeren (a) und gegebenenfalls (b) und (c) direkt oder in teilweiser oder völlig mit Alkalien, Ammoniak oder Aminen neutralisierter Form dispergierbar oder löslich werden.

Es sind dies beispielsweise Pektin, Algin, Chitin, Chitosan, Heparin, Carrageenan, Agar, Gummiarabicum, Tragant, Karaya-Gummi, Ghatti-Gummi, Johannisbrotkornmehl, Guar-Gummi, Tara-Gummi, Inulin, Xanthan, Dextran, Nigeran und Pentosane wie Xylan und Araban, deren Hauptbestandteile aus D-Glukuronsäure, D-Galakturonsäure, D-Galakturonsäuremethylester, D-Mannuronsäure, L-Guluronsäure, D- und L-Galaktose, 3,6-Anhydro-D-galaktose, L-Arabinose, L-Rhamnose, D-Glucuronsäure, D-Xylose, L-Fucose, D-Mannose, D-Fructose und D-Glucose, 2-Amino-2-Desoxi-D-Glukose und 2-Amino-2- Desoxi-D-Galaktose sowie deren N-Acetylderivate, bestehen. Vom wirtschaftlichen Standpunkt aus gesehen verwendet man als Polysaccharide der Komponente (B) bei der Pfropfcopolymerisation vorzugsweise Stärke, thermisch und/oder mechanisch behandelte Stärke, oxidativ, hydrolytisch oder enzymatisch abgebaute Stärken, oxidierte hydrolytisch oder oxidierte enzymatisch abgebaute Stärken sowie chemisch modifizierte Stärken und chemisch modifizierte Monosaccharide und Oligosaccharide. Prinzipiell sind alle Stärken geeignet. Bevorzugt werden jedoch Stärken aus Mais, Weizen, Reis, Tapioka und insbesondere Stärke aus Kartoffeln. Die Stärken sind praktisch nicht in Wasser löslich und können in bekannter Weise durch thermische und/oder mechanische Behandlung oder durch einen enzymatischen oder einen säurekatalysierten Abbau in eine wasserlösliche Form überführt werden. Als Komponente (B) eignen sich auch oxidativ abgebaute Stärken. Als Stärkeabbauprodukte, die entweder durch oxidativen, hydrolytischen oder enzymatischen Abbau von Stärke erhältlich sind, seien beispielsweise folgende Verbindungen genannt: Dextrine, wie Weiß- und Gelbdextrine, Maltodextrine, Glucosesirupe, Maltosesirupe, Hydrolysate von hohem Gehalt an D-Glucose, Stärkeverzuckerungsprodukte sowie Maltose und D-Glucose und deren Isomerisierungsprodukt Fruktose. Als Komponente (B) eignen sich selbstverständlich auch Mono- und 0ligosaccharide, wie Galaktose, Mannose, Ribose, Saccharose, Raffinose, Laktose und Trehalose sowie Abbauprodukte der Cellulose, beispielsweise Cellubiose und ihre Oligomeren.

Als Komponente (B) kommen ebenso oxidierte Stärken, wie z.B. Dialdehydstärke und oxidierte Stärkeabbauprodukte in Betracht, wie beispielsweise Gluconsäure, Glucarsäure und Glucuronsäure. Solche Verbindungen werden beispielsweise durch Oxidation von Stärke mit Perjodat, Chromsäure, Wasserstoffperoxid, Stickstoffdioxid, Stickstofftetroxid, Salpetersäure oder Hypochlorit erhalten.

Als Komponente (B) eignen sich außerdem chemisch modifizierte Polysaccharide, insbesondere chemisch modifizierte Stärken, z.B. mit Säuren zu Estern und mit Alkoholen zu Ethern umgesetzte Stärken und Stärkeabbauprodukte. Die Veresterung dieser Stoffe ist sowohl mit anorganischen als auch mit organischen Säuren, deren Anhydriden oder Chloriden möglich. Bei direkter Veresterung führt das freigesetzte Wasser zu einer säurekatalysierten Spaltung glykosidischer Bindungen. Von besonderem technischen Interesse sind phosphatierte und acetylierte Stärken und Stärkeabbauprodukte. Die gängigste Methode zur Veretherung von Stärke ist die Behandlung der Stärke und der Stärkeabbauprodukte mit organischen Halogenverbindungen, Epoxiden oder Sulfaten in wäßriger alkalischer Lösung. Stärkeether sind beispielsweise die Alkylether, Hydroxyalkylether, Carboxyalkylether und Allylether von Stärke. Unter chemisch modifizierten Stärken gemäß Komponente (B) sollen auch kationisch modifizierte Stärken verstanden werden, z.B. mit 2,3-Epoxipropyltrimethylammoniumchlorid umgesetzte Stärken wie sie z.B. in der US-PS 3 649 616 beschrieben sind.

Zu chemisch modifizierten Polysacchariden gehören beispielsweise auch Carboxymethylcellulose, Hydroxyethylcellulose, Hydroxypropylcellulose, Carboxymethylhydroxyethylcellulose, Sulfoethylcellulose, Carboxymethylsulfoethylcellulose, Hydroxypropylsulfoethylcellulose, Hydroxyethylsulfoethylcellulose, Methylsulfoethylcellulose und Ethylsulfoethylcellulose.

Als Komponente (B) eignen sich vorzugsweise auch chemisch modifizierte abgebaute Stärken, beispielsweise Hydrierungsprodukte von Stärkehydrolysaten, wie Sorbit und Mannit, Maltit und hydrierte Glukosesirupe, wie Sorbitol oder oxidierte hydrolytisch abgebaute oder oxidierte enzymatisch abgebaute Stärken.

Ebenfalls geeignet sind die Produkte der sauer katalysierten oder enzymatischen Umglykosidierung oder Glykosidierung, wie z.B. Methylglukosid.

Zur Herstellung der Pfropfcopolymerisate werden die Monomeren (a) und gegebenenfalls (b) und/oder (c) in Gegenwart von Verbindungen der Komponente (B) radikalisch polymerisiert. In einigen Fällen kann es für die Wirkung des entstehenden Pfropfpolymerisates günstig sein, zwei oder mehrere der unter (B) angegebenen Verbindungen einzusetzen, z . B. Mischungen aus säurekatalytisch oder enzymatisch abgebauten Stärken und Gluconsäure, Mischungen aus einem Monosaccharid und einem Oligosaccharid, Mischungen aus einer enzymatisch abgebauten Stärke und einem Monosaccharid oder Mischungen aus Glukose und Saccharose oder Mannose. Die Polymerisation kann in Gegenwart oder auch in Abwesenheit von inerten Lösemitteln oder inerten Verdünnungsmitteln durchgeführt werden. Da die Polymerisation in Abwesenheit von inerten Löse- oder Verdünnungsmitteln meistens zu uneinheitlichen Pfropfpolymerisaten führt, ist die Pfropfpolymerisation in einem inerten Löse- oder Verdünnungsmittel bevorzugt. Geeignet sind beispielsweise solche inerten Verdünnungsmittel, in denen die unter (B) angegebenen Verbindungen suspendiert werden können und die die Monomeren (A) lösen. In diesen Fällen liegen die Pfropfpolymerisate nach der Polymerisation in suspendierter Form vor und können leicht durch Filtration in fester Form isoliert werden. Geeignete inerte Verdünnungsmittel sind beispielsweise Toluol, Xylol, o-, m-, p-Xylol und Isomerengemische, Ethylbenzol, aliphatische Kohlenwasserstoffe, wie Pentan, Hexan, Heptan, Octan, Nonan, Dodecan, Cyclohexan, Cyclooctan, Methylcyclohexan sowie Mischungen der genannten Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan. Bei der oben beschriebenen Arbeitsweise, bei der die Verbindungen der Komponente (B) in einem inerten Verdünnungsmittel suspendiert sind, setzt man vorzugsweise wasserfreie Verbindungen der Komponente (B) ein und verwendet aus der Gruppe der Monomeren (a) vorzugsweise die Anhydride. Eine bevorzugte Art der Herstellung der Pfropfpolymerisate ist die Lösungspolymerisation, wobei die Verbindungen der Komponente (B), die Monomeren (A) und das gebildete Pfropfcopolymerisat zumindest dispergiert, vorzugsweise in gelöster Form vorliegen. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan sowie Mischungen der genannten inerten Lösemittel. Die Copolymerisation kann kontinuierlich oder diskontinuierlich durchgeführt werden. Die Komponenten (A) und (B) können, wie bereits oben erwähnt, auch in Abwesenheit von inerten Verdünnungs- oder Lösemitteln copolymerisiert werden. Hierfür bietet sich insbesondere die kontinuierliche Polymerisation bei Temperaturen von 160 bis 250°C an. Gegebenenfalls ist es hierbei möglich, in Abwesenheit von Polymerisationsinitiatoren zu arbeiten. Vorzugsweise setzt man jedoch auch hierbei solche Katalysatoren ein, die unter den Polymerisationsbedingungen Radikale bilden, z.B. anorganische und organische Peroxide, Persulfate, Azoverbindungen und sogenannte Redoxkatalysatoren.

Die Pfropfpolymerisate werden im allgemeinen unter Mitverwendung von radikalbildenden Initiatoren hergestellt, vgl. EP-A-0 441 197, Seiten 6 bis 7.

Um Polymerisate mit niedrigem K-Wert herzustellen, wird die Pfropfpolymerisation zweckmäßigerweise in Gegenwart von Reglern durchgeführt. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.%, bezogen auf die bei der Polymerisation eingesetzten Monomeren.

Um farblose oder nur wenig gefärbte Pfropfpolymerisate aus den Komponenten (A) und (B) herzustellen, wird die Polymerisation in Gegenwart von wasserlöslichen Phosphorverbindungen durchgeführt, in denen der Phosphor eine Oxidationszahl von 1 bis 4 hat, deren wasserlöslichen Alkali- oder Ammoniumsalzen, wasserlöslichen-PO (OH) ₂-Gruppen enthaltenden Verbindungen und/oder deren wasserlöslichen Salzen. Vorzugsweise verwendet man phosphorige Säure. Die in Betracht kommenden Phosphorverbindungen werden zur Verringerung der Verfärbung der Pfropfcopolymerisate in Mengen von 0,01 bis 5 Gew.%, bezogen auf die eingesetzten Monomeren (A), angewendet. Die in Betracht kommenden Phosphorverbindungen sind in der EP-A-0 175 317 beschrieben.

Die Copolymerisation der Komponenten (A) und (B) erfolgt üblicherweise in einer in Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich copolymerisieren, indem man das Reaktionsgemisch auf die Polymerisationstemperatur erhitzt. Diese Temperaturen liegen in dem Bereich von 40 bis 150°C. Bei dieser Methode erhält man jedoch Pfropfcopolymerisate, die bei Verwendung von Dicarbonsäuren einen relativ hohen Gehalt an nichtpolymerisierter Dicarbonsäure aufweisen. Um den Verlauf der Polymerisationsreaktion besser kontrollieren zu können, gibt man daher die Monomeren (A) nach dem Anspringen der Polymerisation dem polymerisierenden Gemisch kontinuierlich oder absatzweise in dem Maße zu, daß die Pfropfpolymerisation in dem gewünschten Temperaturbereich gut kontollierbar ist. Bevorzugt ist eine Art der Zugabe der Monomeren der Komponente (A), bei der man im Polymerisationsreaktor zunächst die Verbindungen der Komponente (B) oder zumindest einen Teil der Verbindungen der Komponente (B) zusammen mit mindestens einem Monomer der Gruppe (a) im Reaktor vorlegt und darin unter Rühren auf die gewünschte Polymerisationstemperatur erhitzt. Sobald diese Temperatur erreicht ist, fügt man dazu über einen Zeitraum von etwa 1 bis 10, vorzugsweise 2 bis 8 Stunden, gegebenenfalls die restlichen Monomeren der Gruppe (a) sowie gegebenenfalls die Monomeren (b) und gegebenenfalls (c) sowie den Initiator und gegebenenfalls einen Regler zu. Eine derartige Vorgehensweise wird beispielsweise beim Polymerisieren der Komponenten (A) und (B) in einem inerten Verdünnungsmittel, in dem die Komponente (B) suspendiert ist, sowie auch bei der in Lösung durchgeführten Pfropfcopolymerisation angewendet.

Die Pfropfcopolymerisate werden vorzugsweise durch Suspensions- oder Lösungspolymerisation der Komponenten (A) und (B) in wäßrigem Medium hergestellt, wobei die Lösungspolymerisation in Wasser besonders bevorzugt ist. Bei der Lösungspolymerisation in wäßrigem Medium geht man beispielsweise so vor, daß man die Monomeren (a) und mindestens einen Teil der Verbindungen der Komponente (B) in wäßrigem Medium vorlegt und gegebenenfalls die restlichen Monomeren der Gruppe (a) sowie gegebenenfalls die Monomeren (b) sowie gegebenenfalls die Monomeren (c) kontinuierlich oder absatzweise dem polymerisierenden Reaktionsgemisch zufügt und in der Weise copolymerisiert, daß der Neutralisationsgrad der einpolymerisierten Monomer-Einheiten (1) und (2) der Monomeren der Gruppe (a) nach Abschluß der Pfropfcopolymerisation, d.h. wenn mindestens 95, vorzugsweise 98 bis 99, % der Monomeren polymerisiert sind, 20 bis 80 % beträgt. Vorzugsweise werden die Monomeren (1) der Gruppe (a) am Beginn der Polymerisation bereits in mindestens zu 20 % neutralisierter Form eingesetzt. Bei der Pfropfcopolymerisation in wäßrigem Medium kann man die gesamte Menge der Verbindungen der Komponente (B) oder nur einen Teil, z.B. 50 % der Verbindungen der Komponente (B) zusammen mit den Monomeren (1) der Gruppe (a) vorlegen und die restlichen Mengen an Verbindungen der Komponente (B) dem polymerisierenden Reaktionsgemisch zusammen mit den Monomeren (2) der Gruppe (a) sowie gegebenenfalls den Monomeren (b) und/oder (c) kontinuierlich oder absatzweise zufügen. Um Pfropfcopolymerisate mit geringem Restgehalt an nichtpolymerisiertem Monomeren (1) der Gruppe (a), d.h. insbesondere Maleinsäure, zu erhalten, ist es wichtig, daß man den Neutralisationsgrad der Monomeren während der Copolymerisation kontrolliert. Er soll während der Pfropfcopolymerisation 20 bis 80, vorzugsweise 30 bis 70, % betragen. Man kann hierzu beispielsweise die Monomeren (1) und (2) der Gruppe (a) partiell neutralisieren, so daß ihr Neutralisationsgrad jeweils in dem angegebenen Bereich liegt. Es ist aber auch möglich, die im Reaktor vorgelegten Monomeren (1) der Gruppe (a) vollständig oder zu ca. 90 % zu neutralisieren und die Monomeren (2) der Gruppe (a) in nicht- neutralisierter Form zuzugeben, so daß sich der Gesamtneutralisationsgrad der Monomeren (1) und (2) der Gruppe (a) und gegebenenfalls (b), d.h. wenn man als (b) ein Säuregruppen enthaltendes Monomer einsetzt, z.B. Acrylamidomethylpropansulfonsäure oder Vinylphosphonsäure, während der Polymerisation von zunächst ca. 100 % oder ca. 90 % auf Werte in dem Bereich von 20 bis 80 % erniedrigt. Um einen bestimmten Neutralisationsgrad innerhalb dieses Bereiches der Monomeren (1) und (2) der Gruppe (a) aufrechtzuerhalten, kann man während der Copolymerisation eine Base, z.B. Natronlauge, Kalilauge, Ammoniak oder Ethanolamin, zufügen. In Abhängigkeit von der Zusammensetzung der Pfropfcopolymerisate wird die Hauptmenge, d.h. 60 bis 80 % der Monomeren (1) und (2) der Gruppe (a) bei einem Neutralisationsgrad von 20 bis 80 % polymerisiert. Besonders bevorzugt wird die Lösungscopolymerisation mit Wasserstoffperoxid, Natriumpersulfat oder Mischungen in jedem beliebigen Verhältnis als Initiator durchgeführt. Hierfür benötigt man, bezogen auf die Monomeren (A), 0,5 form bis 40 Gew.% an Initiator. Bestehen die Monomergemische (A) aus einem geringen Anteil der Monomeren (1) der Gruppe (a), wird eine relativ niedrige Initiatormenge und bei einem hohen Anteil der Monomeren (1) der Gruppe (a) eine größere Initiatormenge eingesetzt, z.B. bei 90 Gew.% Monomer (1) der Gruppe (a) etwa 15 bis 4O Gew.% Initiator. Auch hierbei geht man so vor, daß man mindestens einen Teil der Komponente (B) zusammen mit den Monomeren (1) der Gruppe (a), die vorzugsweise zu ca. mindestens 90 % neutralisiert sind, vorlegt und die Monomeren (2) der Gruppe (a) sowie gegebenenfalls die Monomeren (b) und/oder (c) unter Einhaltung des geforderten Neutralisationsgrades von 20 bis 80 % zugibt. Der Neutralisationsgrad der Monomeren (2) der Gruppe (a) kann entweder durch separate Zugabe entsprechender Mengen an Base oder durch Zugabe von partiell neutralisierten Monomeren (2) der Gruppe (a) zum Reaktionsgemisch erfolgen. Der Neutralisationsgrad der partiell neutralisierten Monomeren (2) der Gruppe (a) liegt dann in dem Bereich von 20 bis 80 %.

Wie bereits erwähnt, können Polysaccharide in wäßriger Suspension der Pfropfcopolymerisation unterworfen werden. Vorzugsweise stellt man jedoch Pfropfcopolymerisate aus Polysacchariden dadurch her, daß man ein wasserunlösliches Polysaccharid zunächst in wäßriger Suspension unter Zusatz von Enzymen und/oder Säuren in eine wasserlösliche Form überführt und die dabei erhältliche wäßrige Lösung des abgebauten Polysaccharids der Pfropfcopolymerisation unterwirft. Hierbei wird zunächst ein wasserunlösliches Polysaccharid, wie beispielsweise Kartoffelstärke, in Wasser suspendiert und abgebaut. Dieser Abbau kann unter der Einwirkung von Enzymen, z.B. a- oder β-Amylase oder von entzweigenden Enzymen, wie z.B. Pullulanase, oder durch Einwirkung von anorganischen oder organischen Säuren in bekannter Weise vorgenommen werden. Als anorganische Säuren eignen sich beispielsweise Phosphorsäure, Schwefelsäure, Salzsäure und Salpetersäure. Geeignete organische Säuren sind beispielsweise gesättigte oder ungesättigte Carbonsäuren, z.B. Ameisensäure, Essigsäure, Propionsäure, Acrylsäure, Methacrylsäure, Maleinsäure, Itaconsäure, p-Toluolsulfonsäure und Benzolsulfonsäure. Das Überführen der Polysaccharide in eine wasserlösliche Form wird vorzugsweise mit einem Monomer (a) vorgenommen, das anschließend bei der Pfropfcopolymerisation eingesetzt wird. So kann man beispielsweise in einfacher Weise Kartoffelstärke oder Maisstärke in wäßriger Suspension durch Zugabe von Acrylsäure, Methacrylsäure, Maleinsäure oder Itaconsäure in dem Temperaturbereich von 50 bis 150°C hydrolytisch abbauen. Sobald die Stärke den gewünschten Abbaugrad erreicht hat, wird die zugesetzte Monocarbonsäure oder Maleinsäure oder Itaconsäure zu mindestens 20, vorzugsweise 90, % neutralisiert und durch Zugabe der restlichen Monomeren der Gruppe (a) und gegebenenfalls der Monomeren (b) und gegebenenfalls (c) die Pfropfcopolymerisation durchgeführt.

Der enzymatische Abbau von Stärke wird in dem Temperaturbereich von 30 bis 12O°C durchgeführt, während man den hydrolytischen Abbau der Stärke bei Temperaturen von 50 bis 150°C vornimmt. Für den hydrolytischen Abbau benötigt man etwa 5 Minuten bis 10 Stunden, wobei der Grad des hydrolytischen Abbaus der Stärke von der gewählten Temperatur, dem pH-Wert und der Zeit abhängt. Nähere Angaben über den Abbau von Stärke können der Fachliteratur entnommen werden, vgl. z.B. Günther Tegge, Stärke und Stärkederivate, Behr's Verlag, Hamburg, 1984. In einigen Fällen hat es sich als vorteilhaft erwiesen, bereits bei dem enzymatischen oder hydrolytischen Abbau der Stärke mindestens eine der Phosphorverbindungen einzusetzen, die gemäß der Lehre der EP-A-O 175 317 zu Polymerisaten führen, die nicht oder nur sehr wenig gefärbt sind.

Um auch im alkalischen Bereich farbstabile Polymerisate zu erhalten, setzt man vorzugsweise hydrierte Zucker- und hydrierte Stärkehydrolysate als Komponente (B) ein.

Bei der Pfropfcopolymerisation liegen die Temperaturen üblicherweise in dem Bereich von 40 bis 180, vorzugsweise 60 bis 150, °C. Sobald die Temperatur bei der Copolymerisation oberhalb der Siedepunkte des inerten Verdünnungs- oder Lösemittels oder der Monomeren liegt, wird die Copolymerisation unter Druck durchgeführt. Die Konzentration der Komponenten (A) und (B) beträgt bei der Copolymerisation in Gegenwart von inerten Löse- oder inerten Verdünnungsmitteln 10 bis 80, vorzugsweise 20 bis 70, Gew.%. Die Herstellung der Pfropfcopolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind. Insbesondere kann es vorteilhaft sein, die Pfropfcopolymerisation in Knetern durchzuführen. Ebenso kann es notwendig sein, in einem Kneter zu polymerisieren, wenn man bei hohen Konzentrationen arbeitet oder wenn die Naturstoffe hochmolekular sind und zunächst stark quellen.

Man erhält wasserlösliche Pfropfcopolymerisate mit K-Werten von 6 bis 150, vorzugsweise 7 bis 80 (gemessen an 1 %igen wäßrigen Lösungen der Copolymerisate bei pH 7 und 25°C). Die nach den oben angegebenen Verfahren herstellbaren Pfropfcopolymerisate sind farblose bis bräunlich gefärbte Produkte. Sie liegen beim Polymerisieren in wäßrigem Medium als Dispersionen oder Polymerlösungen vor. In Abhängigkeit von der jeweiligen Zusammensetzung und der Konzentration der Pfropfcopolymerisate handelt es sich dabei um niedrigviskose bis pastöse wäßrige Lösungen oder Dispersionen. Die oben beschriebenen Pfropfpolymerisate sind aufgrund des Naturstoffanteils gegenüber den bisher verwendeten Copolymerisaten auf Basis ethylenisch ungesättigter Monomerer besser abbaubar, mindestens jedoch aus dem Abwasser von Kläranlagen mit dem Klärschlamm eliminierbar.

Die oben beschriebenen wasserlöslichen Polymerisate sind in den Geschirrspülmitteln in Mengen von 0,5 bis 20, vorzugsweise 2 bis 10, Gew.% enthalten.

Die Geschirrspülmittel können gegebenenfalls weitere übliche Zusätze in der dafür üblichen Dosierung enthalten, z.B. Schaumdämpfer, Lösungsvermittler, Farbstoffe und/oder Geruchsstoffe.

Die Geschirrspülmittel können außerdem bis zu 25 Gew.% Phosphat, z.B. Natriumtripolyphosphat, enthalten. Vorzugsweise verwendet man jedoch phosphatfreie Geschirrspülmittel. Sofern man phosphathaltige Geschirrspülmittel formuliert, so geht dies auf Kosten der Komponente (2) der oben beschriebenen Geschirrspülmittel. Die Geschirrspülmittel werden durch Vermischen der einzelnen Komponenten hergestellt. Zur Herstellung pulverförmiger Geschirrspülmittel sprüht man beispielsweise wäßrige Lösungen der Pfropfpolymerisate auf die pulverförmigen Builder der Geschirrspülmittelformulierung unter Trocknungsbedingungen auf. Die pulverförmigen Geschirrspülmittel haben eine mittlere Teilchengröße von 0,1 bis 2 mm. Pulverförmige Geschirrspülmittel, die 30 bis 75 Gew.% Natriumsilikat enthalten, sind gegenüber den flüssigen Geschirrspülmitteln bevorzugt. Der Einsatz der oben beschriebenen Polymerisate der Maleinsäure ist bei denjenigen pulverförmigen Geschirrspülmitteln von besonderem Interesse, die 53 bis 70 Gew.% Natriumsilikat enthalten. Sie lösen sich leicht in Wasser und haben gegenüber bekannten pulverförmigen sowie flüssigen Geschirrspülmitteln, die als wasserlösliches Polymerisat beispielsweise Polyacrylsäure enthalten, den Vorteil, daß sich bei einer maschinellen Geschirrspülwäsche auf Geschirr, Bestecken und Glaswaren praktisch keine Beläge abscheiden. Die Geschirrspülmittel eignen sich sowohl für im Haushalt übliche Spülmaschinen als auch für gewerbliche Spülmaschinen.

Die in den Beispielen angegebenen Teile sind Gewichtsteile. Die Angaben in Prozent beziehen sich auf das Gewicht der Stoffe. Die K-Werte der hydrolysierten Copolymerisate wurden nach H. Fikentscher, Cellulose-Chemie, Band 13, 58-64 und 71-74 (1932) in wäßriger Lösung bei einem pH-Wert von 7, einer Temperatur von 25°C und einer Polymerkonzentration des Natriumsalzes des Copolymerisates von 5 Gew.% bestimmt.

### Beispiele

### Herstellung der Polymerisate

### Polymerisat 1

In einem Reaktor mit Zulaufvorrichtung werden 106,1 g Wasser, 265,14 g der 70 %igen wäßrigen Lösung eines hydrierten Stärkehydrolysates (Polyol 300 der Firma Cerestar), 235,2 g Maleinsäureanhydrid, 2,8 g 50 %ige phosphorige Säure und 1,52 g der 0,1 %igen wäßrigen Lösung von Eisen-IIsulfat unter Rühren mit 307,2 g 50 %iger wäßriger Natronlauge langsam neutralisiert. Während des Neutralisationsvorganges wird der Ansatz bis zum Sieden erhitzt. Unter Siedebedingungen werden gleichmäßig 174 g 50 %iges Wasserstoffperoxid zudosiert. Das Reaktionsgemisch wird nach der Peroxidzugabe noch 1 Stunde nacherhitzt. Die klare, gelbliche Polymerisatlösung hat einen Feststoffgehalt von 51,0 %, einen pH-Wert von 6,2. Das Polymerisat besitzt einen K-Wert von 8,7.

### Polymerisat 2

In einem Reaktor wie bei Polymerisat 1 beschrieben, werden 248,24 g Wasser, 538,24 g Maltodextrin (Cerestar PUR 01915), 341,0 g Maleinsäureanhydrid, 8,12 g 50 %ige phosphorige Säure und 4,4 g der 0,1 %igen wäßrigen Lösung von Eisen-II-sulfat unter Rühren mit 501,1 g 50 %iger wäßriger Natronlauge neutralisiert und gleichzeitig zum Sieden erhitzt. Dann werden unter Siedebedingungen innerhalb von 3 Stunden eine Mischung aus 403,68 g Acrylsäure und 290 g Wasser und innerhalb von 4 Stunden 403,68 g 50 %iges Wasserstoffperoxid gleichmäßig zudosiert. Anschließend wird noch 1 Stunde unter Sieden nacherhitzt. Die klare, gelbliche Polymerisatlösung hat einen Feststoffgehalt von 53,9 % und einen pH-Wert von 4. Der K-Wert des auf einen pH-Wert von 7 mit NaOH eingestellten Polymers beträgt 16.2.

### Polymerisat 3

In einem Reaktor wie bei Polymerisat 1 beschrieben, werden 185,6 g Wasser, 185,6 g Maltodextrin (Cerestar PUR 01915), 235,2 g Maleinsäureanhydrid, 2,8 g 50 %ige phosphorige Säure und 1,52 g 0,1 %ige Eisen-II-sulfat- lösung in Wasser unter Rühren mit 230,4 g 50 %iger wäßriger Natronlauge neutralisiert und gleichzeitig zum Sieden erhitzt. Dann werden unter Siedebedingungen innerhalb von 5 Stunden gleichmäßig 174 g 50 %iges Wasserstoffperoxid zudosiert und noch 1 Stunde nacherhitzt. Die klare, gelbliche Polymerisatlösung besitzt einen Feststoffgehalt von 50,9 % und einen pH-Wert von 4,9. Der K-Wert des auf einen pH-Wert von 7 mit NaOH eingestellten Polymeren beträgt 11,3.

### Polymerisat 4

In einem Reaktor wie bei Polymerisat 1 beschrieben, werden 50 g Wasser, 265,1 g der 70 %igen wäßrigen Lösung eines hydrierten Stärkehydrolysats (Polyol 300 der Firma Cerestar), 2,8 g 50 %ige wäßrige phosphorige Säure und 1,52 g Eisen-II-sulfat (0,1 %ig in Wasser) vorgelegt und zum Rückfluß erhitzt. Nun werden innerhalb von 3,75 Stunden eine Lösung von 46,4 g 2-Merkaptoethanol in 50 g Wasser und innerhalb von 4 Stunden eine Lösung von 232 g Acrylsäure in 100 g Wasser und innerhalb von 5 Stunden eine Lösung von 2,78 g Natriumpersulfat in 50 g Wasser gleichmäßig zudosiert. Nach 1 Stunde Nacherhitzen wird mit 250 g 50 %iger wäßriger Natronlauge neutralisiert, auf 80°C abgekühlt, 5,25 g Wasserstoffperoxid 50 %ig zugesetzt und noch 1 Stunde bei 80°C erhitzt. Die klare, bräunliche Lösung besitzt einen Feststoffgehalt von 49,7 % und einen pH-Wert von 8,3. Der K-Wert des Polymeren beträgt 10,9.

### Polymerisat 5

In einem Reaktor wie bei Polymerisat 1 beschrieben, werden 200 g Wasser, 108 g Saccharose, 17,61 g Maleinsäureanhydrid und 0,02 g Eisen-II-sulfat vorgelegt und mit 14,38 g 50 %iger wäßriger Natronlauge neutralisiert. Anschließend wird das Gemisch zum Sieden erhitzt. Unter Rückflußbedingungen dosiert man innerhalb von 3 Stunden eine wäßrige Lösung von 216,84 g 25 %igem Natriumvinylsulfonat, 2 g Hydroxylammoniumsulfat, 133,44 g Acrylsäure und 34,31 50 %iger wäßriger Natronlauge und 50 g 50 %igem Wasserstoffperoxid gleichmäßig zu. Das Reaktionsgemisch wird noch 1 Stunde nacherhitzt und dann mit 115 g 50 %iger wäßriger Natronlauge neutralisiert. Die gelbe, klare Lösung besitzt einen Feststoffgehalt von 45,1 % und einen pH-Wert von 7,3. Der K-Wert des Polymeren beträgt 16,4.

Die Polymerisate 1 bis 5 wurden als Additiv in einem Geschirrspülmittel getestet, das folgende Zusammensetzung hatte: 20 % Na-citrat · 2 H₂0, 24 % Na-disilikat, 40 % Na-carbonat, 7 % Na-perborat · 1 H₂O, 2 % Tetraacetylethylendiamin, 2 % C₁₃₋₁₅ Fettalkohol umgesetzt mit 4 Mol PO und 2 Mol EO und 5 % Polymer (100 %ig).
- Einsatzmenge:: 20 g Geschirreiniger/5 l Waschflotte
- Abmusterungen:: nach 15 Zyklen Kunststoff, Porzellan, Besteck und Glas.

Zur Prüfung der einzelnen Formulierungen wurden jeweils 4 g der Formulierung pro Liter Trinkwasser (10° deutscher Härte) verwendet. In der Haushaltsgeschirrspülmaschine Miele G 590 SC wurden 15 Zyklen durchgeführt und danach das Geschirr, bestehend aus schwarzen Kunststofftellern, schwarzen Porzellantellern, Messern und Trinkgläsern, visuell abgemustert. Die Note O bedeutet, daß auch nach 15 Zyklen praktisch kein Belag zu sehen ist; die Note 9 bedeutet ein sehr schlechtes Ergebnis. Die Ergebnisse sind in der folgenden Tabelle aufgelistet:

**Tabelle**

| Vergleichsbeispiele | Kunststoffteller | Porzellanteller | Messer | Trinkgläser |
|---|---|---|---|---|
| 1 Blindwert (kein Polymer) | 9 | 5 | 6 | 7 |
| 2 Copolymerisat aus 70 % Acrylsäure und 30 % Maleinsäure, Molmasse 70 000 | 6 | 2-3 | 3-4 | 3-4 |
| 3 Handelsübliches Propfpolymer von Acrylsäure mit Methallylsulfonat auf Glucose und Fructose (2/3 Polymer 1/3 Naturstoff] (Solopol ZB der Firma Stockhausen) | 9 | 5 | 6 | 7 |

| Beispiele | | | | |
|---|---|---|---|---|
| 1 Polymerisat 1 | 3-4 | 1-2 | 1-2 | 3-4 |
| 2 Polymerisat 2 | 7 | 2 | 2 | 3 |
| 3 Polymerisat 3 | 3-4 | 2 | 2 | 3 |
| 4 Polymerisat 4 | 7 | 4 | 5 | 6 |
| 5 Polymerisat 5 | 10 | 2-3 | 3-4 | 3-4 |
| Die erfindungsgemäß zu verwendenden Pfropfpolymeren sind mit Ausnahme von Polymerisat 4 besser als das Polymerisat 2. Alle Pfropfpolymeren sind besser als das handelsübliche Solopol ZB. | | | | |

## Patentansprüche

1. Verwendung von wasserlöslichen Pfropfpolymeren von Monosacchariden, Oligosacchariden, Polysacchariden und deren Derivaten, die erhältlich sind durch radikalisch initiierte Polymerisation von
(A) Monomermischungen aus
(a) 40 bis 100 Gew.% monoethylenisch ungesättigten C₃- bis C₁₀- Monocarbonsäuren und/oder monoethylenisch ungesättigten C₄- bis C₈-Dicarbonsäuren, deren Anhydriden, Alkalisalzen und/oder Ammoniumsalzen,
(b) 0 bis 60 Gew.% anderen monoethylenisch ungesättigten Monomeren, die mit den Monomeren (a) copolymerisierbar sind, und
(c) 0 bis 5 Gew.% mindestens 2 ethylenisch ungesättigte, nicht konjugierte Doppelbindungen im Molekül aufweisenden Monomeren
in Gegenwart von
(B) Monosacchariden, Oligosacchariden, Polysacchariden, oxidativ, hydrolytisch oder enzymatisch abgebauten Polysacchariden, oxidierten hydrolytisch oder oxidierten enzymatisch abgebauten Polysacchariden, chemisch modifizierten Mono-, Oligo- und Polysacchariden oder Mischungen der genannten Verbindungen
im Gewichtsverhältnis (A): (B) von (95 bis 20): (5 bis 80) als Additiv für Geschirrspülmittel, die
(1) mindestens 5 Gew.% mindestens eines Ammonium- oder Alkalimetallcarbonats oder eines Ammonium- oder Alkalimetallsulfats und
(2) mindestens 2 Gew.% Natriumsilikat enthalten.

2. Verwendung nach Anspruch 1, dadurch gekennzeichnet, daß man als Komponente (A)
(a) Acrylsäure, Methacrylsäure, Maleinsäure oder deren Gemische und
(b) Acrylamidomethylpropansulfonsäure, Vinylsulfonsäure, Allylsulfonsäure, Methallylsulfonsäure, N-Vinylimidazol oder deren Gemische
einsetzt.

3. Verwendung nach Anspruch 1 oder 2, dadurch gekennzeichnet, daß man als Komponente (B) Stärkeverzuckerungsprodukte oder hydrierte Stärkehydrolysate einsetzt.
